# EUROPÄISCHE PATENTANMELDUNG

(11) **EP 3 048 027 A1**
(43) Veröffentlichungstag der Anmeldung: **27.07.2016**
(21) Anmeldenummer: 16151017.7
(22) Anmeldetag: 13.01.2016
(51) Int. Cl.: B62B 5/00

(54) **ROLLGESTELL**

(30) Priorität: 22.01.2015 DE 102015100904
(71) Anmelder: Wanzl Metallwarenfabrik GmbH, 89340 Leipheim (DE)
(72) Erfinder: Horn, Karl-Heinz, 86381 Niederraunau (DE); Rampp, Andreas, 87719 Nassenbeuern (DE)

(57) **Zusammenfassung**

Die vorliegende Erfindung betrifft ein Rollgestell (10) mit einem Grundrahmen (12), wobei der Grundrahmen (12) mehrere Profile, insbesondere Rohre, vorzugsweise Vierkantrohre (14, 16, 18) aufweist, wobei die Profile derart zueinander angeordnet sind, dass wenigstens ein erster Stoß (28) eines ersten und eines zweiten Profils dadurch gebildet ist, dass eine Stirnseite des ersten Profils auf einer Außenseite des zweiten Profils zu liegen kommt und wobei wenigstens ein weiterer Stoß (30, 32, 34) dadurch gebildet ist, dass jeweils abgeschrägte Stirnseiten von Profilen aufeinander zu liegen kommen.

## Beschreibung

Die vorliegende Erfindung betrifft ein Rollgestell mit einem Grundrahmen.

Derartige Rollgestelle sind bereits aus dem Stand der Technik bekannt. Die einfachste Form bekannter Rollgestelle ist ein ebener Fahrrahmen, auf dessen Stellfläche großvolumige Gegenstände abgestellt und mit dem Rollgestell transportiert werden können.

Inzwischen sind Rollgestelle bekannt, die vier Eckteile und vier Rahmenteile aufweisen. Die Rahmenteile sind mit den Eckteilen zusammengesteckt. An jedem Eckteil ist dabei eine Aufnahme angeformt. An den Aufnahmen lassen sich Aufbauten, z.B. Wände befestigen, so dass das Rollgestell und die am Rollgestell befestigten Wände einen Rollcontainer bilden.

Aus der DE 198 45 738 A1 ist bereits ein Rollgestell mit einer horizontal angeordneten Stellfläche zum Tragen von Lasten bekannt, das Eckteile und Rahmenteile aufweist, die zusammengesteckt einen Fahrrahmen bilden. Jedes Eckteil ist mit einem Bereich zum Befestigen einer Fahrrolle ausgestattet und weist wenigstens eine Aufnahme auf, die zum Tragen oder Halten von am Rollgestell aufsetzbaren Aufbauten bestimmt ist, wobei jede Aufnahme durch ein Stützteil gebildet ist, das lösbar an einem Eckteil angeordnet ist.

Um eine einfache Montage eines Rollgestells zu ermöglichen, wird versucht, die gesamte Konstruktion ohne Schweißnähte auskommen zu lassen. Allerdings muss gleichzeitig darauf geachtet werden, dass die notwendige Stabilität der Konstruktion gewährleistet ist.

Es ist die Aufgabe der vorliegenden Erfindung, ein Rollgestell der eingangs genannten Art in vorteilhafter Weise weiterzubilden, insbesondere dahingehend, dass die Konstruktion des Rollgestells ohne Schweißnähte auskommt und zugleich eine höhere Stabilität des Rollgestells im Vergleich zu bislang bekannten Lösungen ermöglicht wird, wobei gleichzeitig das Rollgestell einfach montierbar sein soll.

Diese Aufgabe wird erfindungsgemäß gelöst durch ein Rollgestell mit den Merkmalen des Anspruchs 1. Danach ist vorgesehen, dass ein Rollgestell mit einem Grundrahmen versehen ist, wobei der Grundrahmen mehrere Profile aufweist, wobei die Profile derart zueinander angeordnet sind, dass wenigstens ein erster Stoß eines ersten und eines zweiten Profils dadurch gebildet ist, dass eine Stirnseite des ersten Profils auf einer Außenseite des zweiten Profils zu liegen kommt und wobei wenigstens ein weiterer Stoß dadurch gebildet ist, dass jeweils abgeschrägte Stirnseiten von Profilen aufeinander zu liegen kommen.

Die Erfindung basiert auf dem Grundgedanken, dass wenigstens ein Stoß abweichend zu den anderen Stößen ausgebildet ist. Dieser abweichende Stoß ist dadurch gekennzeichnet, dass eines der den Stoß bildenden Profile allein die im Stoß befindliche Ecke ausbildet und das andere Profil nur gegen das erste Profil stößt und nicht bis in die Ecke hineinragt. Dies ist bei den anderen Stößen nicht der Fall, da dort beide Profile aufgrund der Abschrägung in die Ecke hineinragen. Durch diese Variation der Stoßart wird die Konstruktion des Grundrahmens in ihrer Stabilität verbessert. Darüber hinaus kann eine leichtere Anpassung bei Bauteilgrößenänderungen erreicht werden. Die Profile können vorverzinkte Profile sein. Das Rollgestell kann schweißlos zusammengefügt sein.

Des Weiteren kann vorgesehen sein, dass der Stoß bzw. die Stöße sich jeweils in einer Ecke des Grundrahmens befindet bzw. befinden. Dadurch ist ein einfacher Aufbau des Grundrahmens möglich.

Der Grundrahmen kann im Wesentlichen rechteckig ausgebildet sein. Dies ermöglicht eine stabile Konstruktion bei zugleich vergleichsweiser großer Grundfläche für das Rollgestell.

Der Grundrahmen kann weiter wenigstens vier Profile aufweisen. Diese vier Profile können die vier Rechteckseiten eines rechteckigen Grundrahmens bilden. Es ist denkbar, dass zur zusätzlichen Stabilisierung des Grundrahmens ein oder mehrere Zwischenstreben vorgesehen sind.

Die Profile können Rohrprofile, insbesondere Vierkantrohrprofile sein. Rohrprofile ermöglichen eine vergleichsweise leichte Struktur und eine kostengünstige Herstellung des Rollgestells.

Eine abgeschrägte Stirnseite eines Profiles kann im 45°-Winkel abgeschrägt sein. Dadurch wird die Herstellung, aber auch die Montage bzw. das Zusammenfügen der Profile vereinfacht.

Im Bereich des ersten Stoßes können das erste und das zweite Profil senkrecht zueinander angeordnet sein. Dies erleichtert ebenfalls die Herstellung und die Montage der Profile.

Im Bereich eines Stoßes können Befestigungslöcher angeordnet sein. Dadurch wird eine Befestigung der Profile zueinander im Eckbereich bzw. im Bereich des Stoßes vereinfacht.

Des Weiteren kann vorgesehen sein, dass im Bereich des ersten Stoßes ein Eckloch vollständig in einem Profil angeordnet ist und in wenigstens einem weiteren Stoß, insbesondere allen anderen Stößen das Befestigungsloch bzw. die Befestigungslöcher jeweils teilweise durch die den Stoß bildenden Profile gebildet ist bzw. sind. Durch die Kantung ohne Abschrägung im ersten Stoß und dem Umstand, dass das Eckloch vollständig in einem Profil angeordnet ist, fällt dieses Eckloch nicht auf den Schnittpunkt von zwei Profilen, was eine Erhöhung der Stabilität des Grundrahmens zur Folge hat.

Darüber hinaus kann vorgesehen sein, dass in den Ecken des Grundrahmens jeweils ein Eckteil vorgesehen ist. Durch den Einsatz von Eckteilen kann zusätzliche Stabilität erreicht werden.

Mittels des Eckteils können die in dieser Ecke zusammenlaufenden Profile jeweils positioniert und befestigt, insbesondere verschraubt, sein. Dadurch können die Profile besser zueinander fixiert werden.

Außerdem kann vorgesehen sein, dass an einem Eckteil eine Rolle befestigt ist. Dadurch wird es möglich, mittels weniger Verschraubungen sowohl die Rolle, als auch die in dieser Ecke zusammenlaufenden Profile miteinander zu befestigen, was die Montage erheblich vereinfacht.

Des Weiteren ist möglich, dass das Eckteil wenigstens eine Seitenwand aufweist. Dadurch kann die Montage der Profile vereinfacht werden, weil die Seitenwand einen Anschlag für ein oder mehr Profile bilden kann.

Insbesondere kann sich die Seitenwand über die Höhe eines Profils hinaus erstrecken. Dadurch kann eine Abrutschsicherung geschaffen werden. Die Abrutschsicherung kann derart beschaffen sein, dass auf dem Rollgestell befindliche Gegenstände wie Container nicht vom Rollgestell herunterrutschen können.

Der sich über die Höhe eines Profils hinaus erstreckende Teil der Seitenwand kann durch eine Abkantung ausgebildet sein. Die Abkantung kann derart angeordnet sein, dass sie sich in Richtung der Außenseite des Rollgestells erstreckt, also vom Grundrahmen weg weisend angeordnet ist.

Der Grundrahmen kann wenigstens ein vorverzinktes Profil aufweisen. Dadurch kann der Grundrahmen gegen Korrosion geschützt werden. Außerdem wird hierdurch die Fertigung vereinfacht, da der Einsatz vorverzinkter Profile es ermöglicht, die Bestandteile des Rollgestells vorzufertigen und an beliebigen und auch weit entfernten Orten zum fertigen Rollgestell zu montieren.

Insbesondere kann der Grundrahmen ausschließlich aus vorverzinkten Profilen ausgebildet sein, vorzugsweise wobei das Rollgestell soweit möglich aus vorverzinkten Bauteilen ausgebildet ist.

Außerdem kann vorgesehen sein, dass der Grundrahmen ohne Schweißverbindung zusammengefügt ist. Vorzugsweise kommt die gesamte Konstruktion des Rollgestells ohne eine Schweißverbindung aus.

Weitere Einzelheiten und Vorteile der Erfindung sollen nun anhand eines in der Zeichnung näher dargestellten Ausführungsbeispiels erläutert werden.

Es zeigen:
- Fig. 1:: eine perspektivische Ansicht auf ein erfindungsgemäßes Rollgestell;
- Fig. 2:: eine Draufsicht auf das Rollgestell gemäß Fig. 1;
- Fig. 3:: eine perspektivische Ansicht auf den Grundrahmen des Rollgestells von unten gemäß Fig. 1;
- Fig. 4:: eine perspektivische Ansicht auf eine Zwischenstrebe für den Grundrahmen des Rollgestells von unten gem. Fig. 1;
- Fig. 5:: eine perspektivische Ansicht auf ein Eckteil des Rollgestells gemäß Fig. 1; und
- Fig. 6:: eine Explosionsdarstellung der Eckkonstruktion des Rollgestells gemäß Fig. 1.

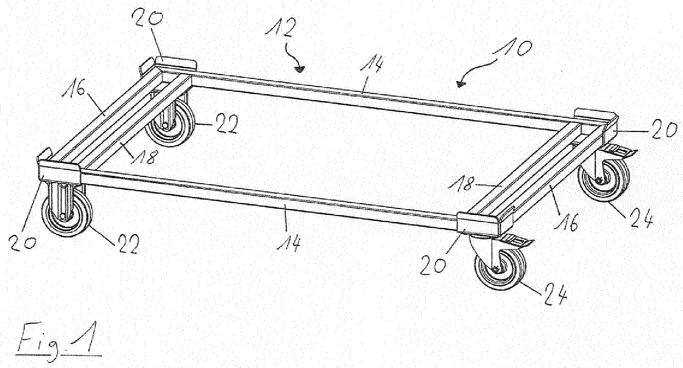

Figur 1 zeigt eine perspektivische Ansicht auf ein erfindungsgemäßes Rollgestell 10.

Das Rollgestell 10 weist einen Grundrahmen 12 auf, der aus mehreren Profilen, hier Vierkantrohren 14, 16, 18 gebildet ist.

Grundsätzlich können alle Arten von Profilen verwendet werden. Beispielsweise können Rohrprofile bzw. Rohre verwendet werden.

Der Grundrahmen 12 wird ohne Verschweißen zusammengefügt und ausschließlich durch entsprechende Verschraubungen oder andere geeignete Befestigungen zusammengehalten.

Der Grundrahmen 12 hat eine rechteckige Grundform und weist zwei Längsrohre 14, zwei außenliegende Seitenrohre 16 und zwei Zwischenstreben 18 auf.

Im in Figur 1 gezeigten Ausführungsbeispiel ist an den Ecken des Grundrahmens 12 jeweils ein Eckteil 20 angeordnet, mittels dessen die in dieser Ecke zusammenlaufenden Vierkantrohre 14, 16, 18 jeweils positioniert und befestigt, insbesondere verschraubt, sind.

An dem Eckteil 20 ist zudem jeweils eine Rolle 22, 24 befestigt. Im hier gezeigten Ausführungsbeispiel ist die Rolle jeweils mittels Verschraubung am Eckteil befestigt.

Die gesamte Konstruktion des Rollgestells 10 kommt somit ohne Schweißnähte aus.

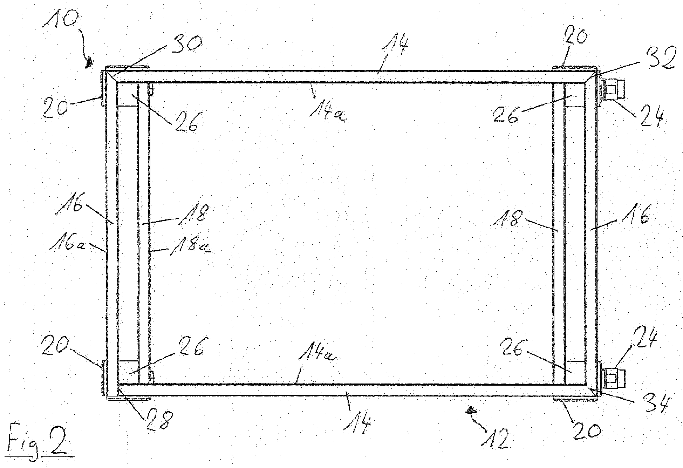

Wie aus Figur 2, die eine Draufsicht auf das Rollgestell 10 zeigt, ersichtlich ist, sind an einer Querseite zwei nicht bremsbare bzw. feststellbare Rollen 22 vorgesehen und an der gegenüberliegenden Querseite zwei bremsbare bzw. feststellbare Rollen 24 vorgesehen.

Wie weiter aus der Draufsicht ersichtlich, weist jedes Eckteil 20 eine nahezu quadratische Grundfläche 26 auf, auf der die in dieser Ecke zusammenlaufenden Vierkantrohre 14, 16, 18 aufliegen und dort auch jeweils verschraubt sind.

Dabei ist ein Stoß 28 eines außenliegenden Längsrohres 14 und eines außenliegenden Seitenrohres 16 dadurch gebildet, dass eine Stirnseite des außenliegenden Längsrohres 14 auf einer Außenseite des außenliegenden Seitenrohres 16 zu liegen kommt.

Die Stirnseiten der diesen Stoß 28 bildenden Rohre sind hier senkrecht zu den Längsachsen der Rohre ausgerichtet bzw. angeordnet. Außerdem ist die Ecke des Grundrahmens 12 hier vollständig durch das Seitenrohr 16 ausgebildet.

Weiter ist in drei von vier Ecken der Stoß 30, 32, 34 der außenliegenden Vierkantrohre, nämlich der Längsrohre 14 und der außenliegenden Seitenrohre 16, dadurch gebildet, dass jeweils eine abgeschrägte Stirnseite eines Längsrohres 14 auf einer abgeschrägten Stirnseite eines Seitenrohres 16 zu liegen kommt.

Dadurch ist der Grundrahmen 12 des Rollgestells 10 durch mehrere Profile, nämlich die Vierkantrohre 14, 16, 18 gebildet, wobei diese Profile derart zueinander angeordnet sind, dass wenigstens ein erster Stoß eines ersten und eines zweiten Profils dadurch gebildet ist, dass die Stirnseite des ersten Profils auf einer Außenseite des zweiten Profils zu liegen kommt und dass wenigstens ein weiterer Stoß, nämlich der Stoß 30, der Stoß 32 und der Stoß 34 dadurch gebildet ist, dass jeweils abgeschrägte Stirnseiten von Profilen aufeinander zu liegen kommen.

Dabei ist im Stoß 30, im Stoß 32 und im Stoß 34 eine abgeschrägte Stirnseite eines Profiles, also hier eines Längsrohres 14 und eines Seitenrohres 16, im 45°-Winkel abgeschrägt.

Im Stoß 28 ist, wie vorstehend beschrieben, die Ecke des Grundrahmens 12 vollständig durch das Seitenrohr 16 ausgebildet, während in den Stößen 30, 32 und 34 die Ecke des Grundrahmens jeweils zur Hälfte durch das entsprechende Längsrohr 14 und das entsprechende Seitenrohr 16 gebildet ist.

Die Stöße 28, 30, 32, 34 befinden sich jeweils in einer Ecke des Grundrahmens 12.

Darüber hinaus ist parallel jeweils zu einem Seitenrohr 16 eine Zwischenstrebe 18 vorgesehen. Der Abstand der außenliegenden Außenkante bzw. Außenfläche 16a des Seitenrohres 16 und der Außenkante bzw. Außenfläche 18a der Zwischenstrebe entspricht im Wesentlichen der Breite des Eckteils 20, so dass die Zwischenstrebe 18 bereichsweise auf dem Eckteil 20 aufliegt.

Die Länge der Zwischenstrebe 18 entspricht im Wesentlichen dem Abstand der innenliegenden Außenkanten bzw. Außenflächen 14a der Längsrohre 14.

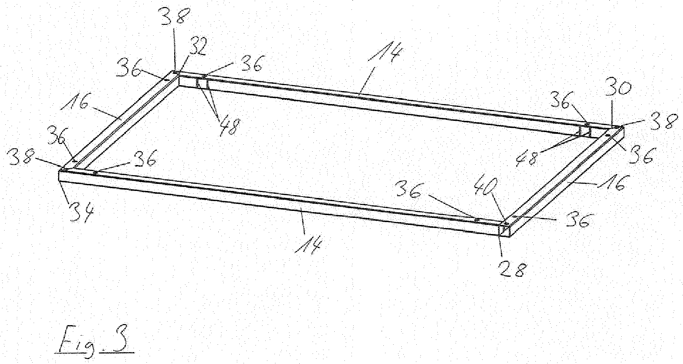

Figur 3 zeigt eine perspektivische Draufsicht auf den Grundrahmen 12 von unten ohne Zwischenstreben 18.

In den Eckbereichen des Grundrahmens 12 sind dabei jeweils drei Befestigungslöcher 36 bzw. 38 vorgesehen.

Versetzt zu allen Ecken ist jeweils sowohl in jedem Längsrohr 14 und in jedem Seitenrohr 16 jeweils ein Befestigungsloch 36 vorgesehen.

Die Befestigungslöcher 38 befinden sich dabei direkt in der Ecke und sind in den Stößen 30, 32 und 34 jeweils zur Hälfte in dem entsprechenden Längsrohr 14 und in dem entsprechenden Seitenrohr 16 gebildet.

In der Ecke mit dem Stoß 28 ist abweichend zu den anderen Ecken ein Eckloch 40 vorgesehen, das ausschließlich im Seitenrohr 16 ausgebildet bzw. angeordnet ist.

Somit sind im Bereich eines jeden Stoßes 28, 30, 32, 34 Befestigungslöcher 36, 38, 40 angeordnet, wobei im Bereich des ersten Stoßes 28 das Eckloch 40 vollständig in einem Profil angeordnet ist und in den weiteren Stößen 30, 32, 34, also allen anderen Stößen 30, 32, 34 die Befestigungslöcher 38 jeweils teilweise durch die den Stoß bildenden Profile gebildet sind.

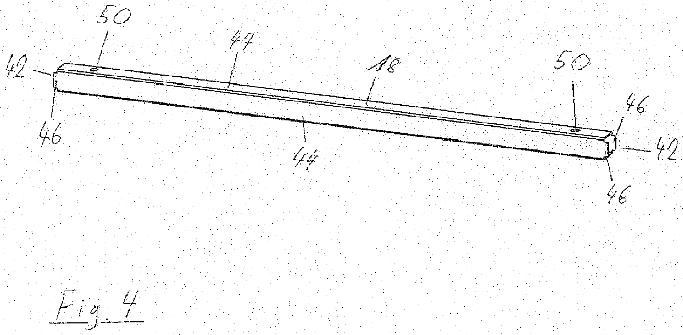

Figur 4 zeigt eine perspektivische Ansicht auf eine Zwischenstrebe 18 für den Grundrahmen 12 des Rollgestells 10.

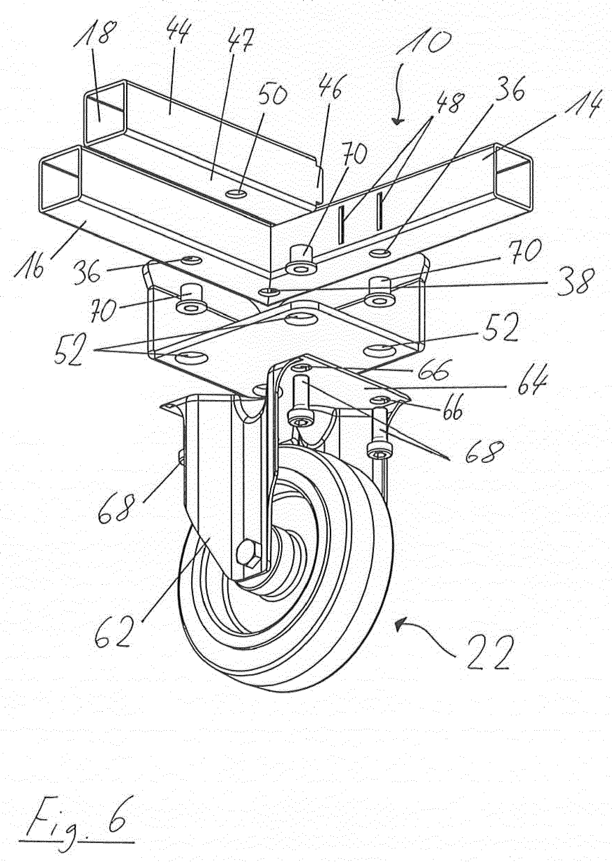

Die Zwischenstrebe 18 weist jeweils endseitig an ihren Stirnseiten 42 zwei sich aus zwei Außenflächen 44 sich erstreckende Einstecklaschen 46 auf, die für das Einstecken in Einsteckschlitze 48 in den Längsrohren 14 vorgesehen sind (siehe z.B. Figur 3 und Figur 6). Die Außenflächen 44 sind zueinander parallel.

Außerdem ist in den Außenflächen 47 jeweils versetzt zu den Stirnseiten 42 jeweils eine Bohrung 50 vorgesehen.

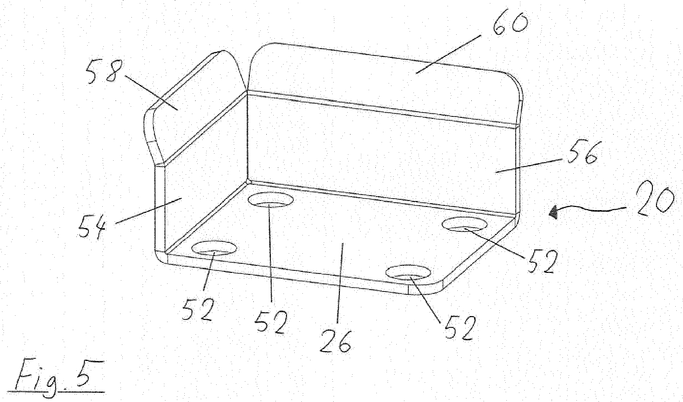

Figur 5 zeigt eine perspektivische Ansicht auf ein Eckteil 20 des Rollgestells 10.

Die Grundfläche 26 des Eckteils 20 weist dabei vier Durchgangslöcher 52 auf.

Das Eckteil 20 weist weiter zwei Seitenwände 54, 56 auf.

Die Seitenwände 54 und 56 sind an zwei aufeinanderstoßenden Seiten der Grundfläche 26 jeweils senkrecht zur Grundfläche 26 vorgesehen und durch Umformung ausgebildet.

Diese Seitenwände 54, 56 erstrecken sich über die Höhe eines Profils hinaus, d.h. sie überragen das entsprechende Längsrohr 14 bzw. des entsprechende Seitenrohr 16.

Die Seitenwand 54 und die Seitenwand 56 schließen eine Ecke ein.

Im vom der Grundfläche 26 abgewandten, also freien Ende der Seitenwand 54 und auch der Seitenwand 56 ist weiter eine Abkantung 58, 60 vorgesehen.

Die Abkantung 58, 60 ist ein sich über die Höhe eines Profils hinaus erstreckender Teil der Seitenwand 54 bzw. 56. Die Abkantung 58 bzw. 60 kann hier derart angeordnet sein, dass sie sich in Richtung der Außenseite des Rollgestells 10 erstreckt.

Die Abkantung 58 bzw. 60 ist also vom Grundrahmen 12 weg weisend angeordnet.

Die Abkantung 58 ist aus der Seitenwand 54 ausgebildet und zwar durch Umformung der Seitenwand 54 zu der von der Grundfläche 26 abgewandten Seite.

Die Abkantung 60 ist aus der Seitenwand 56 ausgebildet und zwar durch Umformung der Seitenwand 56 zu der von der Grundfläche 26 abgewandten Seite.

Der Grundrahmen 12 kann wenigstens ein vorverzinktes Profil aufweisen. Dadurch kann der Grundrahmen 12 gegen Korrosion geschützt werden. Außerdem wird hierdurch die Fertigung vereinfacht, da der Einsatz vorverzinkter Profile es ermöglicht, die Bestandteile des Rollgestells 10 vorzufertigen und an beliebigen und auch weit entfernten Orten zum fertigen Rollgestell 10 zu montieren.

Insbesondere kann der Grundrahmen 12 ausschließlich aus vorverzinkten Profilen ausgebildet sein, vorzugsweise wobei das Rollgestell 10 soweit möglich aus vorverzinkten Bauteilen ausgebildet ist.

Außerdem kann vorgesehen sein, dass der Grundrahmen 12 ohne Schweißverbindung zusammengefügt ist. Vorzugsweise kommt die gesamte Konstruktion des Rollgestells 10 ohne eine Schweißverbindung aus.

Figur 6 zeigt eine Explosionsdarstellung der Eckkonstruktion des Rollgestells 10. Beispielhaft ist die Befestigung einer nicht bremsbaren bzw. feststellbaren Rolle 22 gezeigt. Die Befestigung der bremsbaren bzw. feststellbaren Rollen 24 erfolgt im Wesentlichen identisch.

Die Rolle 22 weist einen Rollenträger 62 mit einer Tragplatte 64 auf. In der Tragplatte 64 sind vier Durchgangslöcher 66 vorgesehen.

Des Weiteren sind vier Befestigungsschrauben 68 und vier Muttern 70 gezeigt.

Die Montage des Rollgestells 10 erfolgt folgendermaßen:

Die Bestandteile des Rollgestells 10 werden ohne Verschweißen zusammengefügt.

Die Befestigungsschrauben 68 werden durch die Durchgangslöcher 66 der Tragplatte 64 des Rollenträgers 62 und die Befestigungslöcher 36, 38, 40 und 50 hindurchgeführt und mit den Muttern 70 verschraubt.

Dadurch werden die Rolle 22 bzw. die Rolle 24, das Eckteil 20 und das Längsrohr 14, das Seitenrohr 16 und die Zwischenstrebe 18 miteinander verschraubt. Außerdem sind dann die Einstecklaschen 46 in die Einsteckschlitze 48 in den Längsrohren 14 eingesteckt.

Durch die Kantung ohne Abschrägung im ersten Stoß 28 und dem Umstand, dass das Eckloch 40 vollständig in einem Profil angeordnet ist, nämlich hier im Seitenrohr 16, fällt dieses Eckloch 40, das ein Bohrloch sein kann, nicht auf den Schnittpunkt von zwei Profilen, was eine Erhöhung der Stabilität des Grundrahmens 12 zur Folge hat.

Durch die Seitenwände 54, 56 mit den Abkantungen 58, 60 der Eckteile 20 kann eine Abrutschsicherung für das Rollgestell 10 geschaffen werden. Die Abrutschsicherung ist hier derart beschaffen, dass auf dem Rollgestell 10 befindliche Gegenstände wie Container nicht vom Rollgestell 10 herunterrutschen können.

Die Ausrichtung der Abkantungen 58, 60 nach außen erleichtert das Einsetzen bzw. Aufsetzen von Gegenständen auf das Rollgestell 10.

Dadurch, dass das Rollgestell 10 ausschließlich durch Bauelemente zusammengefügt wird, die durch Verschraubungen und ohne Schweißnähte montiert werden, ist eine hohe Flexibilität bei Baugrößenänderungen für das Rollgestell 10 möglich.

## Patentansprüche

1. Rollgestell (10) mit einem Grundrahmen (12), wobei der Grundrahmen (12) mehrere Profile aufweist, wobei die Profile derart zueinander angeordnet sind, dass wenigstens ein erster Stoß (28) eines ersten und eines zweiten Profils dadurch gebildet ist, dass eine Stirnseite des ersten Profils auf einer Außenseite des zweiten Profils zu liegen kommt und wobei wenigstens ein weiterer Stoß (30, 32, 34) dadurch gebildet ist, dass jeweils abgeschrägte Stirnseiten von Profilen aufeinander zu liegen kommen.

2. Rollgestell (10) nach Anspruch 1, **dadurch gekennzeichnet, dass** der Stoß bzw. die Stöße (28, 30, 32, 34) sich jeweils in einer Ecke des Grundrahmens (12) befindet bzw. befinden.

3. Rollgestell (10) nach Anspruch 1 oder Anspruch 2, **dadurch gekennzeichnet, dass** der Grundrahmen (12) im Wesentlichen rechteckig ausgebildet ist.

4. Rollgestell (10) nach einem der vorhergehenden Ansprüche, **dadurch gekennzeichnet, dass** der Grundrahmen (12) wenigstens vier Profile aufweist.

5. Rollgestell (10) nach einem der vorhergehenden Ansprüche, **dadurch gekennzeichnet, dass** die Profile Rohrprofile, insbesondere Vierkantrohrprofile (14, 16, 18) sind.

6. Rollgestell (10) nach einem der vorhergehenden Ansprüche, **dadurch gekennzeichnet, dass** eine abgeschrägte Stirnseite eines Profiles im 45°-Winkel abgeschrägt ist.

7. Rollgestell (10) nach einem der vorhergehenden Ansprüche, **dadurch gekennzeichnet, dass** im Bereich des ersten Stoßes (28) das erste und das zweite Profil senkrecht zueinander angeordnet sind.

8. Rollgestell (10) nach einem der vorhergehenden Ansprüche, **dadurch gekennzeichnet, dass** im Bereich eines Stoßes (28, 30, 32, 34) Befestigungslöcher (36, 38, 40) angeordnet sind.

9. Rollgestell (10) nach einem der vorhergehenden Ansprüche, **dadurch gekennzeichnet, dass** im Bereich des ersten Stoßes (28) ein Eckloch (40) vollständig in einem Profil angeordnet ist und in wenigstens einem weiteren Stoß (30, 32, 34), insbesondere allen anderen Stößen (30, 32, 34) das Befestigungsloch (38) bzw. die Befestigungslöcher (38) jeweils teilweise durch die den Stoß bildenden Profile gebildet ist bzw. sind.

10. Rollgestell (10) nach einem der vorhergehenden Ansprüche, **dadurch gekennzeichnet, dass** in den Ecken des Grundrahmens (12) jeweils ein Eckteil (20) vorgesehen ist.

11. Rollgestell (10) nach Anspruch 10, **dadurch gekennzeichnet, dass** mittels des Eckteils (20) die in dieser Ecke zusammenlaufenden Profile jeweils positioniert und befestigt, insbesondere verschraubt, sind.

12. Rollgestell (10) nach Anspruch 10 oder Anspruch 11, **dadurch gekennzeichnet, dass** am Eckteil (20) jeweils eine Rolle (22, 24) befestigt ist.

13. Rollgestell (10) nach einem der Ansprüche 10 bis 12, **dadurch gekennzeichnet, dass** das Eckteil (20) wenigstens eine Seitenwand (54, 56) aufweist.

14. Rollgestell (10) nach einem der vorhergehenden Ansprüche, **dadurch gekennzeichnet, dass** der Grundrahmen (12) wenigstens ein vorverzinktes Profil aufweist, insbesondere ausschließlich aus vorverzinkten Profilen ausgebildet ist, vorzugsweise wobei das Rollgestell soweit möglich aus vorverzinkten Bauteilen ausgebildet ist.

15. Rollgestell (10) nach einem der vorhergehenden Ansprüche, **dadurch gekennzeichnet, dass** der Grundrahmen (12) ohne Schweißverbindung zusammengefügt ist.
